# EUROPÄISCHE PATENTSCHRIFT

(11) **EP 3 064 923 B1**
(45) Veröffentlichungstag und Bekanntmachung des Hinweises auf die Patenterteilung: **16.05.2018**
(21) Anmeldenummer: 16157208.6
(22) Anmeldetag: 24.02.2016
(51) Int. Cl.: B08B 15/00, B08B 15/02, F02M 35/00, G01M 15/02, G01M 15/10, G01M 17/007

(54) **FAHRZEUGPRÜFSTAND**
VEHICLE TEST BENCH
BANC D'ESSAI DE VEHICULE

(30) Priorität: 02.03.2015 DE 202015100985 U
(43) Veröffentlichungstag der Anmeldung: 07.09.2016
(73) Patentinhaber: Dürr Assembly Products GmbH, 66346 Püttlingen (DE)
(72) Erfinder: Rothfuchs, Stefan, 66578 Schiffweiler (DE); Kurt, Ismail, 66333 Völklingen (DE); Kaufmann, Joachim, 66740 SaarLouis (DE); Bauer, Alexander, 66557 Illingen (DE); Czeska, Fabian, 66383 St. Ingbert (DE)
(74) Vertreter: Patentanwaltskanzlei Vièl & Wieske PartGmbB

(56) Entgegenhaltungen:
- EP-A1- 1 210 988
- US-A- 4 216 710

## Beschreibung

Die vorliegende Erfindung betrifft einen Fahrzeugprüfstand zur Durchführung von Prüf-, Mess- und/oder Einstellarbeiten an einem in dem Fahrzeugprüfstand befindlichen Fahrzeug nach dem Oberbegriff des Anspruchs 1.

Bei Fahrzeugprüfständen werden Messungen und Prüfvorgänge an einem Fahrzeug teilweise auch bei laufendem Motor durchgeführt. Zur Verbesserung der Arbeitsbedingungen der in der Umgebung des Fahrzeugprüfstandes befindlichen Personen ist es bekannt, die Abgase des Fahrzeugs, das sich zur Durchführung der Mess- und/oder Prüfvorgänge in dem Fahrzeugprüfstand befindet, mittels einer Absaugvorrichtung für Abgase des Fahrzeugs abzuführen. Um zu vermeiden, dass ein Abgasabführungselement unmittelbar an das Fahrzeug montiert werden muss, ist es bekannt, eine Absaugvorrichtung so auszugestalten, dass diese ein zumindest im Wesentlichen horizontal verlaufendes Flächenelement aufweist, das zumindest im Wesentlichen auf dem Niveau der Fahrbahn des Fahrzeugprüfstands angeordnet ist. Dieses Flächenelement besteht aus einem Gitter. Das Flächenelement bildet somit insgesamt und auf seiner vollen Fläche die Eintrittsöffnung eines Abführungskanals für die Abgase. Dieser Abführungskanal schließt sich unmittelbar an dieses Gitter auf dessen voller Fläche an. Damit hat dieser Abführungskanal in der vollen Breite der Fläche eine bestimmte Höhe, um die Abgase abführen zu können.

Aus der US-PS 4,216,710 ist eine Vorrichtung bekannt zur Absaugung von Abgasen eines Fahrzeugs in einem Fahrzeugprüfstand. Hierzu ist ein ebenes Flächenelement vorgesehen, dass sich auf dem Niveau der Fahrbahn des Fahrzeugs befindet. Dieses Flächenelement weist einen oder mehrere Schlitze auf, die sich quer zur Fahrtrichtung des Fahrzeugs erstrecken. Durch diese Schlitze werden die Abgase abgesaugt, indem Unterdruck erzeugt wird.

Aus der EP 1 210 988 A1 ist eine Abgasabsaugung eines in einem Fahrzeugprüfstand befindlichen Fahrzeugs bekannt, bei der im hinteren Bereich des im Prüfstand stehenden Fahrzeugs seitliche Begrenzungswände vorhanden sind. Hinter dem Fahrzeug sind weiterhin bewegliche Elemente vorhanden, die beispielsweise nach Art eines Rollladens von dort nach oben geführt sind zum Heck des Fahrzeugs oberhalb der Austrittsöffnung des Auspuffendrohres. Wenn das Fahrzeug in den Prüfstand eingefahren ist und der "Rollladen" entsprechend an das Fahrzeugheck herangeführt ist, ergibt sich in Verbindung mit den seitlichen Begrenzungswänden ein Volumen hinter dem Fahrzeug, in dem die Abgase gesammelt und von dort abgesaugt werden

Der vorliegenden Erfindung liegt die Aufgabe zu Grunde, die Abgasabführung zu verbessern.

Diese Aufgabe wird nach der vorliegenden Erfindung gemäß Anspruch 1 gelöst, indem das horizontal verlaufende Flächenelement in dessen Mitte eine geschlossene Fläche aufweist sowie im Randbereich wenigstens eine schlitzförmige Öffnung. Diese wenigstens eine schlitzförmige Öffnung erstreckt sich entlang wenigstens einer der seitlichen Kanten des horizontal verlaufenden Flächenelementes. Die wenigstens eine schlitzförmige Öffnung bildet den Eintrittsbereich einer Abgasabführungsvorrichtung, in der ein Unterdruck erzeugbar ist. Weiterhin sind entlang der Außenkanten des horizontal verlaufenden Flächenelementes nach oben weisende Flächenteile angeordnet, die bei in horizontaler Richtung auf diese Flächenteile wirkenden Kräften elastisch in die horizontale Richtung abklappen derart, dass bei einer Berührung durch Bauteile des Fahrzeugs beim Überfahren keine Beschädigung der Bauteile des Fahrzeugs auftritt und dass nach dem Überfahren der Flächenteile durch die Bauteile des Fahrzeugs sich die Flächenteile wieder aufrichten, wobei die wenigstens eine schlitzförmige Öffnung innerhalb der Fläche angeordnet ist, die durch die Flächenteile begrenzt wird.

Durch diese Ausgestaltung erweist es sich als vorteilhaft, dass die räumliche Ausdehnung des Eintrittsbereichs der Abgasabführungsvorrichtung begrenzt bleibt. Dies erweist sich insbesondere deswegen als vorteilhaft, weil sich das zumindest im Wesentlichen horizontal verlaufende Flächenelement im Kopfbereich eines Werkers befindet, der sich zur Durchführung von Arbeiten an dem Fahrzeug in der Grube zwischen den Fahrspuren des Fahrzeugprüfstandes unterhalb des Fahrzeugs befindet.

Durch die Begrenzung der Größe des Eintrittsbereichs der Abgase in die Abgasabführungsvorrichtung wird vorteilhaft auch die räumliche Ausdehnung der Abgasabführungsvorrichtung begrenzt. Damit wird die Kopffreiheit für einen Werker verbessert, der sich in der Grube des Fahrzeugs befindet zur Durchführung von Arbeiten unterhalb des Fahrzeugs, das sich in dem Fahrzeugprüfstand befindet.

Es hat sich gezeigt, dass die Abgase verwirbelt werden, wenn diese auf die geschlossene Fläche auftreffen. Durch diese Verwirbelung können die Abgase gezielt mittels der wenigstens einen schlitzförmigen Öffnung abgesaugt werden. Dabei bildet die schlitzförmige Öffnung den Eintrittsbereich einer Absaugvorrichtung, in der ein Unterdruck erzeugbar ist. Die Absaugvorrichtung kann aus einem oder mehreren Absaugkanälen bestehen. Durch den Unterdruck werden die Abgase in den bzw. die Absaugkanäle eingesogen.

Es ist möglich, lediglich eine schlitzförmige Öffnung vorzusehen, die abhängig von der Position der Austrittsöffnung des Endrohres der Auspuffanlage an dem Fahrzeug an der linken oder der rechten Seite des Prüfstandes angeordnet sein kann.

Dabei erweist es sich als besonders vorteilhaft, wenn die Breite des zumindest im Wesentlichen horizontal verlaufenden Flächenelementes der Breite des Fahrzeugprüfstandes zwischen den beiden Fahrspuren des Fahrzeugprüfstandes entspricht. Dadurch wird zum einen eine gute Abgasabführung erreicht auch bei einer entsprechend ausgeprägt seitlichen Position der Austrittsöffnung des Endrohres der Auspuffanlage des Fahrzeugs. Außerdem lassen sich damit die schlitzförmigen Öffnungen ebenfalls entsprechend weit seitlich positionieren, wenn diese sich entlang der Seitenkanten des zumindest im Wesentlich horizontal verlaufenden Flächenelementes erstrecken. Dadurch wird wiederum vorteilhaft erreicht, dass der bzw. die Kanäle für die Abgasabführung seitlich angeordnet werden können. Dadurch bleibt vorteilhaft in der Mitte der Grube unterhalb des Fahrzeugs im Fahrzeugprüfstand die Kopffreiheit erhalten. Dort befindet sich lediglich die geschlossene Fläche in der Mitte des zumindest im Wesentlichen horizontal verlaufenden Flächenelementes, ohne dass unmittelbar unterhalb dieser geschlossenen Fläche ein Absaugkanal verlaufen muss.

Dies erweist sich als besonders vorteilhaft bei Fahrzeugen, bei denen die Austrittsöffnung des Endrohres der Auspuffanlage nicht am hinteren Ende des Fahrzeugs angeordnet ist sondern unterhalb des Fahrzeugs weiter vorne, beispielsweise in der Fahrzeugmitte. Gerade dort würde sich eine Abgasabführung, die in voller Breite des Fahrzeugprüfstandes eine entsprechende Ausdehnung in vertikaler Richtung aufweist, nachteilig für die Kopffreiheit des Werkers in der Grube unterhalb des Fahrzeugs erweisen. Der Werker muss ich häufig gerade in diesem Bereich aufhalten zur Durchführung von Arbeiten.

Das "elastische Abklappen" bedeutet, dass die Flächenteile federelastisch in die nach oben weisende Richtung aufgestellt werden. Bei horizontal wirkenden Kräften klappen diese Flächenteile entgegen dieser federelastischen Kraft in horizontale Richtung ab. Dabei können diese Flächenteile in sich formstabil sein und um eine in horizontaler Richtung orientierte Achse gelagert sein, um die diese Flächenteile bei horizontal wirkenden Kräften abklappen. Diese Flächenteile können auch so ausgestaltet sein, dass diese in sich elastisch verformbar sind. Beispielsweise können diese Flächenteile aus Gummi oder einem entsprechend elastischen Kunststoff bestehen.

Durch diese Flächenteile wird vorteilhaft erreicht, dass die Abgase nach dem Auftreffen auf die Fläche in der Mitte des zumindest im Wesentlichen horizontal verlaufenden Flächenelementes den Bereich zwischen diesen Flächenteilen nicht mehr verlassen sondern durch die wenigstens eine schlitzförmige Öffnung abgesaugt werden.

Da die Flächenteile abklappbar sind, wird vorteilhaft erreicht, dass bei einer Berührung durch entsprechende Bauteile des Fahrzeugs (beispielsweise entsprechend weit heruntergezogene Front- oder Heckschürzen oder andere Teile des Unterbodens des Fahrzeugs) beim Überfahren keine Beschädigung der entsprechenden Teile des Fahrzeugs auftreten. Nachdem die Teile des Fahrzeugs die Flächenteile überfahren haben, richten diese sich wieder auf, so dass die Abgase entsprechend abgesaugt werden.

Bei der Ausgestaltung nach Anspruch 2 sind wenigstens zwei schlitzförmige Öffnungen vorhanden, die sich sowohl entlang der linken Seitenkante als auch entlang der rechten Seitenkante der zumindest im Wesentlichen horizontal verlaufenden Fläche erstrecken. Hierbei erstrecken sich die wenigstens zwei schlitzförmigen Öffnungen in Längsrichtung der Fahrspur eines in den Fahrzeugprüfstand einfahrenden bzw. ausfahrenden Fahrzeuges parallel zu dieser Fahrspur.

Bei dieser Ausgestaltung erweist es sich als vorteilhaft, dass der Fahrzeugprüfstand flexibel für Fahrzeuge verwendet werden kann, unabhängig davon, ob die Austrittsöffnung des Endrohres der Auspuffanlage auf der linken Seite oder der rechten Seite des Fahrzeugs angeordnet ist. Auch wenn die Austrittsöffnung des Endrohres mittig angeordnet ist, werden die Abgase effizient abgesaugt.

Wie bereits im Zusammenhang mit Anspruch 1 als einer dort möglichen Ausführungsform beschrieben ist, bleibt die Kopffreiheit in der Mitte des Fahrzeugprüfstandes in der Grube unterhalb des Fahrzeugs weitgehend erhalten.

Bei der Ausgestaltung nach Anspruch 3 besteht die Abgasabführungsvorrichtung aus wenigstens einem Absaugkanal, wobei der wenigstens eine Absaugkanal sowohl außermittig von der zumindest im Wesentlichen horizontal verlaufenden Fläche als auch unterhalb dieser Fläche weggeführt ist.

Wenn nur ein Absaugkanal vorhanden ist, wird dieser seitlich im Bereich der Fahrspur aus der Grube des Fahrzeugprüfstandes herausgeführt.

Sofern auf jeder Seite (links und rechts) ein Absaugkanal vorhanden ist, werden diese Absaugkanäle vorteilhaft nicht unmittelbar im Fahrzeugprüfstand im Bereich der Grube zusammengeführt. Dadurch wird vorteilhaft erreicht, dass in diesem Bereich die Kopffreiheit des Werkers möglichst weitgehend erhalten bleibt.

Bei der Ausgestaltung nach Anspruch 4 werden die nach oben weisenden Flächenteile durch nebeneinander angeordnete, nach oben weisende Bürsten gebildet.

Dadurch sind die Flächenteile einfach ausgestaltet und damit kostengünstig.

Gemäß Anspruch 5 weist der Fahrzeugprüfstand eine Längsverstelleinrichtung auf zur Längsverstellung der Position des zumindest im Wesentlichen horizontal verlaufenden Flächenelementes in Fahrtrichtung eines in den Fahrzeugprüfstand einfahrenden oder ausfahrenden Fahrzeugs.

Die Bezeichnung der Fahrtrichtung des Fahrzeugs bedeutet im Zusammenhang mit dieser Erfindung nicht zwingend, dass das zumindest im Wesentlichen horizontal verlaufende Flächenelement nur dann verstellbar ist, wenn ein Fahrzeug in den Fahrzeugprüfstand einfährt oder ausfährt. Die Bezeichnung der Fahrtrichtung in diesem Zusammenhang bedeutet lediglich die Bezeichnung der Richtung, in der das zumindest im Wesentlichen horizontal verlaufende Flächenelement verstellbar ist.

Mit dieser Längsverstellung ist der Fahrzeugprüfstand vorteilhaft anpassbar für verschiedene Fahrzeugtypen. Dies gilt insbesondere auch im Hinblick darauf, dass bei unterschiedlichen Fahrzeugtypen unterschiedliche Positionen der Austrittsöffnung des Endrohres der Auspuffanlage in Fahrzeuglängsrichtung gegeben sein können.

Gemäß Anspruch 6 weist der Fahrzeugprüfstand eine Radstandsverstelleinrichtung auf sowie eine Ankopplungsvorrichtung zwischen der Längsverstelleinrichtung des zumindest im Wesentlichen horizontal verlaufenden Flächenelementes und der Radstandsverstelleinrichtung.

Mit einer solchen Radstandverstelleinrichtung kann der Fahrzeugprüfstand an unterschiedliche Fahrzeuge mit unterschiedlichen Radständen angepasst werden. Gemäß Anspruch 6 erfolgt dabei angekoppelt und damit automatisch eine "Mitverstellung" der Position des zumindest im Wesentlichen horizontal verlaufenden Flächenelementes im Fahrzeugprüfstand.

Ein Ausführungsbeispiel der Erfindung ist in der Zeichnung dargestellt. Es zeigt dabei:
- Fig. 1:: eine Darstellung eines zumindest im Wesentlichen horizontal verlaufenden Flächenelementes und
- Fig. 2:: eine Darstellung des zumindest im Wesentlichen horizontal verlaufenden Flächenelementes als Bestandteil eines Fahrzeugprüfstandes.

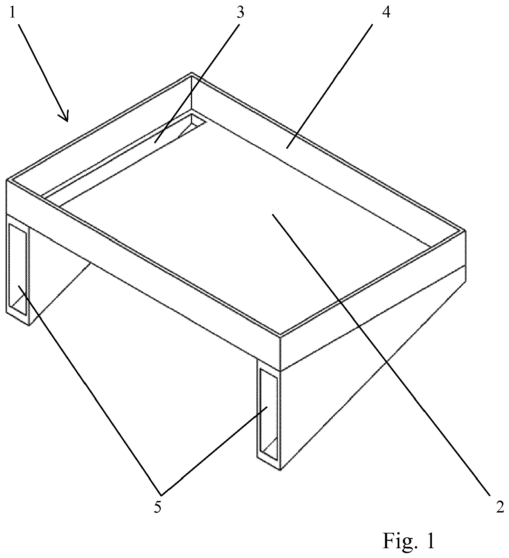

Figur 1 zeigt eine Darstellung eines zumindest im Wesentlichen horizontal verlaufenden Flächenelementes 1.

Dieses Flächenelement 1 weist in seiner Mitte eine geschlossene Fläche 2 auf.

Weiterhin ist zu sehen, dass sich im Randbereich des horizontal verlaufenden Flächenelementes 1 schlitzförmige Öffnungen 3 befinden. In der Darstellung der Figur 1 ist lediglich auf einer Seite diese schlitzförmige Öffnung 3 zu sehen. Auf der anderen (gegenüberliegenden) Seite ist spiegelbildlich ebenfalls eine solche schlitzförmige Öffnung vorhanden.

Unterhalb diese schlitzförmigen Öffnungen 3 schließen sich Absaugkanäle 5 an zur Abführung der Abgase. Diese werden durch einen Unterdruck in den Absaugkanälen 5 angezogen und dann über die Absaugkanäle 5 abgeführt. Die Weiterführung der Absaugkanäle 5 ist in der Figur 1 nicht dargestellt.

Oberhalb der geschlossenen Fläche 2 kommt es zu Verwirbelungen der Abgase nach dem Auftreffen der Abgase auf die Fläche 2. Dadurch werden die Abgase zunächst in diesem Bereich gehalten bevor sie über die schlitzförmigen Öffnungen 3 abgesaugt werden.

In der Darstellung der Figur 1 sind als Flächenteile, die das sich zumindest im Wesentlichen horizontal verlaufende Flächenelement 1 begrenzen, Bürsten 4 dargestellt. Diese geben nach, wenn sie beim Überfahren durch ein entsprechendes Bauteil des Fahrzeugs berührt werden und richten sich anschließend wieder auf. Durch diese Bürsten 4 werden die Abgase nach dem Auftreffen auf die geschlossene Fläche 2 in dem Bereich des zumindest im Wesentlichen horizontal verlaufenden Flächenelementes 1 gehalten und dadurch über die schlitzförmigen Öffnungen 3 abgesaugt.

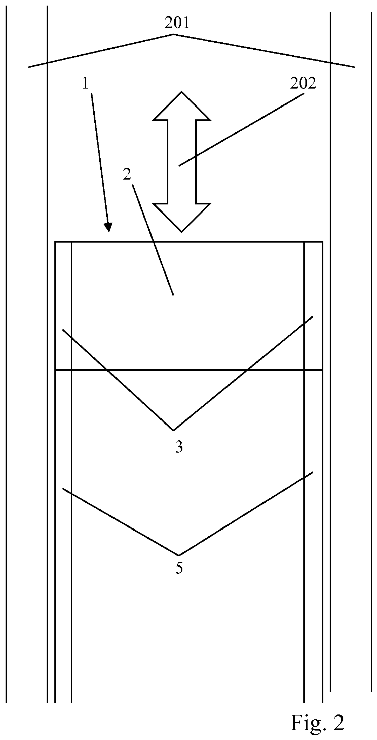

Figur 2 zeigt eine Darstellung des zumindest im Wesentlichen horizontal verlaufenden Flächenelementes 1 als Bestandteil eines Fahrzeugprüfstandes. Dieser Fahrzeugprüfstand weist zwei Fahrspuren 201 auf. Zwischen diesen beiden Fahrspuren befindet sich das zumindest im Wesentlichen horizontal verlaufende Flächenelement 1.

Dabei ist in der Darstellung der Figur 2 zu sehen, dass das zumindest im Wesentlichen horizontal verlaufende Flächenelement 1 in seiner Breite so bemessen ist, dass dieses zumindest im Wesentlichen horizontal verlaufende Flächenelement sowohl rechts als auch links nahezu an die jeweilige Fahrspur 201 anstößt.

Es ist zu sehen, dass sich die schlitzförmigen Öffnungen 3 entlang der seitlichen Kanten des zumindest im Wesentlichen horizontal verlaufenden Flächenelementes 1 erstrecken.

Von diesen schlitzförmigen Öffnungen 3 erstreckt sich jeweils ein Absaugkanal 5 seitlich entlang der Fahrspuren zu einem Ende des Fahrzeugprüfstandes.

Vorteilhaft bleibt dadurch in der Mitte die Kopffreiheit weitestgehend erhalten.

Weiterhin ist durch die Richtungen der beiden Pfeile 202 zu sehen, dass das zumindest im Wesentlichen horizontal verlaufende Flächenelement 1 in Fahrtrichtung eines in den Fahrzeugprüfstand einfahrenden bzw. ausfahrenden Fahrzeugs in seiner Position verstellbar ist. Damit kann die Position vorteilhaft an die jeweilige Position der Austrittsöffnung des Endrohres der Auspuffanlage des Fahrzeugs angepasst werden.

Es ist auch bekannt, Fahrzeugprüfstände an unterschiedliche Radstände von unterschiedlichen Fahrzeugen anzupassen. Gegebenenfalls kann die Längsverstelleinrichtung des zumindest im Wesentlichen horizontal verlaufenden Flächenelementes 1 mit einer Radstandsverstelleinrichtung des Fahrzeugprüfstandes zur Anpassung an unterschiedliche Radstände gekoppelt werden.

## Patentansprüche

1. Fahrzeugprüfstand zur Durchführung von Prüf-, Mess- und/oder Einstellarbeiten an einem in dem Fahrzeugprüfstand befindlichen Fahrzeug, wobei der Fahrzeugprüfstand eine Absaugvorrichtung (1, 3, 5) für Abgase des Fahrzeugs umfasst, wobei die Absaugvorrichtung (1, 3, 5) ein horizontal verlaufendes Flächenelement (1) aufweist, das auf dem Niveau der Fahrbahn des Fahrzeugprüfstands angeordnet ist, wobei das horizontal verlaufende Flächenelement (1) in dessen Mitte eine geschlossene Fläche (2) aufweist sowie im Randbereich wenigstens eine schlitzförmige Öffnung (3), die sich entlang wenigstens einer der seitlichen Kanten des horizontal verlaufenden Flächenelementes (1) erstreckt, und wobei die wenigstens eine schlitzförmige Öffnung (3) den Eintrittsbereich einer Abgasabführungsvorrichtung (5) bildet, in der ein Unterdruck erzeugbar ist, **dadurch gekennzeichnet, dass** entlang der Außenkanten des horizontal verlaufenden Flächenelementes (1) nach oben weisende Flächenteile (4) angeordnet sind, die bei in horizontaler Richtung auf diese Flächenteile (4) wirkenden Kräften elastisch in horizontale Richtung abklappen derart, dass bei einer Berührung durch Bauteile des Fahrzeugs beim Überfahren keine Beschädigung der Bauteile des Fahrzeugs auftritt und dass nach dem Überfahren der Flächenteile (4) durch die Bauteile des Fahrzeugs sich die Flächenteile (4) wieder aufrichten, wobei die wenigstens eine schlitzförmige Öffnung (3) innerhalb der Fläche angeordnet ist, die durch die Flächenteile (4) begrenzt wird.

2. Fahrzeugprüfstand nach Anspruch 1,
**dadurch gekennzeichnet, dass** wenigstens zwei schlitzförmige Öffnungen (3) vorhanden sind, die sich sowohl entlang der linken Seitenkante als auch entlang der rechten Seitenkante des horizontal verlaufenden Flächenelementes (1) derart erstrecken, dass sich die wenigstens zwei schlitzförmigen Öffnungen (3) in Längsrichtung der Fahrspur (201) eines in den Fahrzeugprüfstand einfahrenden bzw. ausfahrenden Fahrzeuges parallel zu dieser Fahrspur (201) erstrecken.

3. Fahrzeugprüfstand nach Anspruch 1 oder 2,
**dadurch gekennzeichnet, dass** die Abgasabführungsvorrichtung (5) aus wenigstens einem Absaugkanal (5) besteht, wobei der wenigstens eine Absaugkanal (5) sowohl außermittig von dem horizontal verlaufenden Flächenelement (1) als auch unterhalb dieses Flächenelementes (1) weggeführt ist.

4. Fahrzeugprüfstand nach einem der Ansprüche 1 bis 3,
**dadurch gekennzeichnet, dass** die nach oben weisenden Flächenteile (4) durch nebeneinander angeordnete, nach oben weisende Bürsten (4) gebildet werden.

5. Fahrzeugprüfstand nach einem der Ansprüche 1 bis 4,
**dadurch gekennzeichnet, dass** der Fahrzeugprüfstand eine Längsverstelleinrichtung aufweist zur Längsverstellung der Position des horizontal verlaufenden Flächenelementes (1) in Fahrtrichtung eines in den Fahrzeugprüfstand einfahrenden oder ausfahrenden Fahrzeugs (202).

6. Fahrzeugprüfstand nach Anspruch 5,
**dadurch gekennzeichnet, dass** der Fahrzeugprüfstand eine Radstandsverstelleinrichtung aufweist sowie eine Ankopplungsvorrichtung zwischen der Längsverstelleinrichtung des horizontal verlaufenden Flächenelementes (1) und der Radstandsverstelleinrichtung.

## Claims

1. A vehicle test bench for performing testing, measuring and/or setting works on a vehicle located in the vehicle test bench, wherein the vehicle test bench includes a suction device (1, 3, 5) for exhaust gases of the vehicle, wherein the suction device (1, 3, 5) comprises a horizontally-running surface element (1), which is arranged at the same level as the lane of the vehicle test bench, wherein the horizontally-running surface element (1) comprises, in the center thereof, a closed surface (2) as well as, in the edge region, at least one slit-shaped opening (3) which extends along at least one of the lateral edges of the horizontally-running surface element (1), and wherein the at least one slit-shaped opening (3) forms the entry region of an exhaust gas evacuation device (5), in which a negative pressure can be generated, **characterized in that** surface parts (4) facing upward are arranged along the outer edges of the horizontally-running surface element (1), which, with forces acting on these surface parts (4) in the horizontal direction, flexibly fold in the horizontal direction in such a way that no damage of the components of the vehicle occurs when touched by components of the vehicle while being travelled-over, and **in that** after travelling over the surface parts (4) by the components of the vehicle, the surface parts (4) raise again, wherein the at least one slit-shaped opening (3) is arranged within the surface which is bordered by the surface parts (4).

2. Vehicle test bench according to claim 1,
**characterized in that** at least two slit-shaped openings (3) are present, which extend both along the left lateral edge and along the right lateral edge of the horizontally-running surface element (1) in such a way that the at least two slit-shaped openings (3) extend in the longitudinal direction of the lane (201) of a vehicle driving into or out of the vehicle test bench in parallel to said lane (201).

3. Vehicle test bench according to claim 1 or 2,
**characterized in that** the exhaust gas evacuation device (5) consists of at least one suction channel (5), wherein the at least one suction channel (5) is guided both eccentrically relative to the horizontally-running surface element (1) and below said surface element (1).

4. Vehicle test bench according to one of claims 1 to 3,
**characterized in that** the upward facing surface parts (4) are formed by brushes (4) which are arranged side by side and face upward.

5. Vehicle test bench according to one of claims 1 to 4,
**characterized in that** the vehicle test bench comprises a longitudinal adjustment device for longitudinal adjustment of the position of the horizontally-running surface element (1) in the driving direction of a vehicle (202) driving into or out of the vehicle test bench.

6. Vehicle test bench according to claim 5,
**characterized in that** the vehicle test bench comprises a wheelbase adjustment device as well as a coupling device between the longitudinal adjustment device of the horizontally-running surface element (1) and the wheelbase adjustment device.

## Revendications

1. Banc d'essai de véhicule pour effectuer des travaux de test, de mesure et/ou de réglage sur un véhicule situé dans le banc d'essai de véhicule, ledit banc d'essai de véhicule comprenant un dispositif d'aspiration (1, 3, 5) pour les gaz d'échappement du véhicule, ledit dispositif d'aspiration (1, 3, 5) présentant un élément de surface (1) s'étendant horizontalement et disposé au niveau de la surface de roulement du banc d'essai de véhicule, ledit élément de surface (1) s'étendant horizontalement étant muni en son milieu d'une surface fermée (2) ainsi que d'au moins une ouverture (3) en forme de fente dans la région du bord, laquelle ouverture s'étend le long d'au moins un des bords latéraux de l'élément de surface (1) s'étendant horizontalement, et ladite au moins une ouverture (3) en forme de fente formant la zone d'entrée d'un dispositif d'évacuation des gaz d'échappement (5) dans lequel peut être générée une sous-pression, **caractérisé en ce que** des parties de surface (4) dirigées vers le haut sont disposées le long des bords extérieurs de l'élément de surface (1) s'étendant horizontalement, lesquelles parties de surface (4) se rabattent en direction horizontale de façon élastique lorsque des forces agissent dessus en direction horizontale, de telle sorte que, en cas de contact par des pièces du véhicule lors d'un passage, les pièces du véhicule ne soient pas endommagées, et **en ce qu'**après le passage des parties de surface (4) par les pièces du véhicule, les parties de surface (4) se redressent, l'au moins une ouverture (3) en forme de fente étant disposée à l'intérieure de la surface limitée par les parties de surface (4).

2. Banc d'essai de véhicule selon la revendication 1, **caractérisé en ce qu'**il est prévu au moins deux ouvertures (3) en forme de fente, lesquelles s'étendent aussi bien le long du bord latéral gauche que le long du bord latéral droit de l'élément de surface (1) s'étendant horizontalement, de telle sorte que les au moins deux ouvertures (3) en forme de fente s'étendent en direction longitudinale de la trajectoire (201) d'un véhicule entrant ou sortant du banc d'essai de véhicule et parallèlement à cette trajectoire (201).

3. Banc d'essai de véhicule selon la revendication 1 ou 2, **caractérisé en ce que** le dispositif d'évacuation des gaz d'échappement (5) est constitué d'au moins un canal d'aspiration (5), ledit au moins un canal d'aspiration (5) étant placé aussi bien de façon excentrée par rapport à l'élément de surface (1) s'étendant horizontalement qu'en dessous de cet élément de surface (1).

4. Banc d'essai de véhicule selon l'une des revendications 1 à 3, **caractérisé en ce que** les parties de surface (4) dirigées vers le haut sont constituées par des brosses (4) dirigées vers le haut et disposées côte à côte.

5. Banc d'essai de véhicule selon l'une des revendications 1 à 4, **caractérisé en ce que** le banc d'essai de véhicule comprend un dispositif de réglage longitudinal pour régler longitudinalement la position de l'élément de surface (1) s'étendant horizontalement dans la direction d'avancement d'un véhicule (202) entrant ou sortant dans le banc d'essai de véhicule.

6. Banc d'essai de véhicule selon la revendication 5, **caractérisé en ce que** le banc d'essai de véhicule présente un dispositif de réglage de l'empattement ainsi qu'un dispositif d'accouplement entre le dispositif de réglage longitudinal de l'élément de surface (1) s'étendant horizontalement et le dispositif de réglage de l'empattement.
